(19) Europäisches Patentamt
European Patent Office
Office européen des brevets

(11) **EP 4 697 763 A1**

(12) **EUROPEAN PATENT APPLICATION**
published in accordance with Art. 153(4) EPC

(43) Date of publication:
**18.02.2026 Bulletin 2026/08**

(21) Application number: **23932322.3**

(22) Date of filing: **08.04.2023**

(51) International Patent Classification (IPC):
*H04W 4/70* (2018.01)

(52) Cooperative Patent Classification (CPC):
**H04W 4/70; H04W 24/08; H04W 72/40**

(86) International application number:
**PCT/CN2023/087170**

(87) International publication number:
**WO 2024/212022 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• HU, Ziquan
  **Beijing 100085 (CN)**
• ZHAO, Qun
  **Beijing 100085 (CN)**
• ZHAO, Wensu
  **Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **COMMUNICATION METHOD AND APPARATUS, AND READABLE STORAGE MEDIUM**

(57) Provided in the present disclosure are a communication method and apparatus, and a readable storage medium. The method comprises: in a scenario of unlicensed spectrum communication, performing sidelink (SL) received signal strength indicator (RSSI) measurement on a sending resource pool according to a set start symbol in a first time slot, wherein the first time slot is a time slot for transmitting a first channel. In the method of the present disclosure, provided is an RSSI measurement mode in an SL communication scenario under an unlicensed spectrum, such that user equipments can rationally determine, according to a set start symbol, time-domain positions for performing RSSI measurement, thereby improving the referability of RSSI measurement results of the user equipments, and helping to ensure the effectiveness of SL communication.

performing a sidelink RSSI measurement on a
transmission resource pool according to an indicated
starting symbol of a first slot — S201

FIG. 2

Processed by Luminess, 75001 PARIS (FR)

## Description

### FIELD

The present disclosure relates to the field of wireless communication technology, and in particular to a communication method and apparatus, and a readable storage medium.

### BACKGROUND

In order to support direct communication between user equipment (UE), a direct link or sidelink (SL) communication manner is introduced. In Release 18 (R18) of the 3rd generation partnership project (3GPP), sidelink communication supporting unlicensed spectrum is studied.

### SUMMARY

The present disclosure provides a communication method and apparatus, and a readable storage medium.
According to a first aspect, the present disclosure provides a communication method, which is performed by a sidelink user equipment (SL UE) and includes:

in a scenario of communication through unlicensed spectrum, performing a sidelink received signal strength indicator (RSSI) measurement on a transmission resource pool according to an indicated starting symbol of a first slot, in which the first slot is configured for transmitting a first channel.

The method of the present disclosure may be applied to an SL communication scenario in unlicensed spectrum, the user equipment 101 may rationally determine the time domain position for performing RSSI measurement according to the indicated starting symbol, improving the reference value of RSSI measurement results of each user equipment 101, and helping to ensure the effectiveness of SL communication.
In some possible implementations, the indicated starting symbol includes at least one of:

a first starting symbol; or
a second starting symbol,
in which the first starting symbol and the second starting symbol are candidate starting symbols within the first slot for transmitting the first channel, and the second starting symbol is later than the first starting symbol.

In some possible implementations, performing the sidelink received signal strength indicator (RSSI) measurement on the transmission resource pool according to the indicated starting symbol of the first slot includes:
performing an RSSI measurement on the first channel transmitted by each sub-channel in the transmission resource pool within an interval starting from the next symbol of the first starting symbol to the last symbol of the first slot configured for transmitting the first channel.
In some possible implementations, performing the sidelink received signal strength indicator (RSSI) measurement on the transmission resource pool according to the indicated starting symbol of the first slot includes:
performing an RSSI measurement on the first channel transmitted by each sub-channel in the transmission resource pool within an interval starting from the next symbol of the second starting symbol to the last symbol of the first slot configured for transmitting the first channel.
In some possible implementations, performing the sidelink received signal strength indicator (RSSI) measurement on the transmission resource pool according to the indicated starting symbol of the first slot includes:

determining a first time domain interval and a second time domain interval according to the first starting symbol and the second starting symbol; and
performing an RSSI measurement on the first channel transmitted by each sub-channel in the transmission resource pool in the first time domain interval and the second time domain interval, respectively.

In some possible implementations, a starting position of the first time domain interval is the next symbol of the first starting symbol.
In some possible implementations, an ending position of the first time domain interval is the second starting symbol, or a previous symbol of the second starting symbol.
In some possible implementations, a starting position of the second time domain interval is the next symbol of the second starting symbol, or the second starting symbol.

In some possible implementations, an ending position of the second time domain interval is the last symbol of the first slot configured for transmitting the first channel.

In some possible implementations, the method further includes:

determining a first number of RSSI measurement results above a first threshold in the first time domain interval and the second time domain interval; and

determining a channel busy rate (CBR) of the transmission resource pool according to the first number and twice a total number of the sub-channels.

In some possible implementations, the first threshold is defined by a protocol or configured by a network device.

In some possible implementations, the first channel is at least one of:

a physical sidelink control channel (PSCCH); or
a physical sidelink shared channel (PSSCH).

According to a second aspect, the present disclosure provides a communication apparatus, and the apparatus may be used to perform steps performed by the SL UE in the first aspect described above or in any of the possible designs of the first aspect. The SL UE may realize each of the functions of the methods described above in the form of a hardware structure, a software module, or a hardware structure plus a software module.

When the apparatus illustrated in the second aspect is implemented by the software module, the apparatus may include a processing module, and the processing module may be configured for a communication processing apparatus to perform a processing operation such as generating information/messages to be transmitted, or processing received signals to obtain information/messages.

When performing the steps of the first aspect described above, the processing module is configured to perform, in a scenario of communication through unlicensed spectrum, a sidelink received signal strength indicator (RSSI) measurement on a transmission resource pool according to an indicated starting symbol of a first slot,

in which the first slot is configured for transmitting a first channel.

According to a third aspect, the present disclosure provides a user equipment including a processor and a memory. The memory is used to store a computer program; and the processor is used to execute the computer program to implement the first aspect or any of the possible designs of the first aspect.

According to a fourth aspect, the present disclosure provides a computer-readable storage medium storing instructions (or referred as to the computer program, a program), in which a computer invokes and executes the instructions to cause the computer to perform the first aspect described above, or any of the possible designs of the first aspect.

It should be understood that the forgoing general description and the following detailed description are only illustrative and explanatory, and cannot limit the present disclosure.

## BRIEF DESCRIPTION OF THE DRAWINGS

In order to more clearly explain the technical solutions in embodiments of the present disclosure, the accompanying drawings necessary for the description of the embodiments will be described below, and the following drawings are only some embodiments of the present disclosure, and do not specifically limit the scope of protection of the present disclosure.

The accompanying drawings herein are incorporated into the specification and constitute a part of the specification. Theses accompanying drawings illustrate embodiments conforming to embodiments of the present disclosure and are used to explain the principles of embodiments of the present disclosure together with the specification.

FIG. 1 is a schematic diagram of an architecture of a wireless communication system provided by an embodiment of the present disclosure.

FIG. 2 is a flowchart of a communication method illustrated according to an illustrative embodiment.

FIG. 3 is a flowchart of another communication method illustrated according to an illustrative embodiment.

FIG. 4 is a flowchart of another communication method illustrated according to an illustrative embodiment.

FIG. 5 is a flowchart of another communication method illustrated according to an illustrative embodiment.

FIG. 6 is a flowchart of another communication method illustrated according to an illustrative embodiment.

FIG. 7 is a schematic diagram of a starting symbol illustrated according to an illustrative embodiment.

FIG. 8 is a block diagram of a communication apparatus illustrated according to an illustrative embodiment.

FIG. 9 is a block diagram of a user equipment illustrated according to an illustrative embodiment.

## DETAILED DESCRIPTION OF THE DISCLOSURE

Embodiments of the present disclosure are further described in connection with the accompanying drawings and specific implementations.

Illustrative embodiments will be illustrated in detail herein, and the examples thereof are illustrated in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with embodiments of the present disclosure. On the contrary, they are merely examples of a device and a method consistent with some aspects of the present disclosure, as elaborated in the appended claims.

The embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment can also be implemented as an independent embodiment, and the order of each step in a certain embodiment may be arbitrarily exchanged, and in addition, optional implementations in a certain embodiment may be arbitrarily combined. In addition, various embodiments may be arbitrarily combined, for example, some or all steps of different embodiments may be arbitrarily combined, and one embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are for the purpose of describing specific embodiments only, and are not intended to limit the present disclosure.

In embodiments of the present disclosure, unless otherwise specified, an element represented in the singular form, such as "a", "an", "the", "this" and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, "a plurality" refers to two or more.

In some embodiments, terms such as "at least one of", "one or more", "a plurality of", "multiple", and the like may be interchangeable with each other.

In some embodiments, descriptions such as "at least one of A or B", "A and/or B", "A in one case, B in another case" and "in response to one case A, in response to another case B" may include the following technical solutions according to the case: in some embodiments, A (performing A independently of B); in some embodiments, B (performing B independently of A); in some embodiments, selecting one from A and B to perform (selectively performing A and B); or in some embodiments, A and B (performing both A and B). It is similar to the above when there are more branches such as A, B, C, etc.

In some embodiments, descriptions such as "A or B" may include the following technical solutions according to the case: in some embodiments, A (performing A independently of B); in some embodiments, B (performing B independently of A); or in some embodiments, selecting one from A and B to perform (selectively performing A and B). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types thereof may be the same or different; for another example, when the description object is "information", the "first information" and the "second information" may be the same information or different information, and the contents thereof may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in a case where," "upon," "when," "if," "in case," and the like may be interchangeable with each other.

In some embodiments, terms such as "greater than," "greater than or equal to," "not less than," "more than," "more than or equal to," "not less than," "higher than," "higher than or equal to," "not lower than," "above," and the like may be interchangeable with each other, and terms such as "smaller than," "smaller than or equal to," "not greater than," "less than," "less than or equal to," "not more than," "lower than," "lower than or equal to," "not higher than," "below" may be interchangeable with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchangeable with each other.

In some embodiments, terms such as "access network device (AN device)", "radio access network device (RAN device)", "base station (BS)", "radio base station", "fixed station" "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", and "bandwidth part (BWP)" may be interchangeable with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote device, mobile device, wireless device, wireless communication device, remote device, mobile subscriber station, access terminal, mobile terminal, wireless terminal, remote terminal, handset, user agent, mobile client, client, etc. may be interchangeable with each other.

In some embodiments, an access network device, a core network device, or a network device may be interchangeable with a terminal. For example, each embodiment of the present disclosure may be applied to a configuration in which communication between an access network device, a core network device, or a network device and a terminal is interchangeable with communication between a plurality of terminals (for example, it may also be referred to as a device-to-device (D2D), a vehicle-to-everything (V2X), or the like). In this case, the terminal may have all or a part of the functions of the access network device. Further, languages such as "uplink" and "downlink" may be interchangeable with languages corresponding to inter-terminal communication (for example, "side"). For example, an uplink channel, a downlink channel, or the like may be interchangeable with a sidelink channel, and an uplink, a downlink, or the like may be interchangeable with a sidelink.

In some embodiments, the terminal may be interchangeable with an access network device, a core network device, or a network device. In this case, the access network device, the core network device, or the network device may have all or a part of the functions of the terminal.

In some embodiments, the name of information or the like is not limited to the name described in embodiments, and terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be interchangeable with each other.

In some embodiments, terms such as "codebook", "codeword", and "precoding matrix" may be interchangeable with each other. For example, the codebook may be a collection of one or more codewords/precoding matrices.

In some embodiments, terms such as "up", "uplink", and "physical uplink" may be interchangeable with each other, terms such as "down", "downlink", and "physical downlink" may be interchangeable with each other, terms such as "side", "sidelink", "side communication", "sidelink communication", "direct", "direct link", "direct communication", and "direct link communication" may be interchangeable with each other.

In some embodiments, terms such as "downlink control information (DCI)", "downlink (DL) assignment", "DL DCI", "uplink (UL) grant", and "UL DCI" may be interchangeable with each other.

In some embodiments, terms such as "physical downlink shared channel (PDSCH)" and "DL data" may be interchangeable with each other, and terms such as "physical uplink shared channel (PUSCH)" and "UL data" may be interchangeable with each other.

In some embodiments, terms such as "radio", "wireless", "radio access network (RAN)", "access network (AN)", and "RAN-based" may be interchangeable with each other.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "moment", "time point", "time", and "time position" may be interchangeable with each other, and terms such as "duration", "time period", "time window", "window", and "time" may be interchangeable with each other.

In some embodiments, terms such as "component carrier (CC)", "cell", "frequency carrier", and "carrier frequency" may be interchangeable with each other.

In some embodiments, terms such as "resource block (RB)", "physical resource block (PRB)", "sub-carrier group (SCG)", "resource element group (REG)", "PRB pair", "RB pair", and "resource element (RE)" may be interchangeable with each other.

In some embodiments, terms such as wireless access scheme, waveform, and the like may be interchangeable with each other.

In some embodiments, "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "number of layers", "rank" , "resource", "resource set", "resource group", "beam", "beam width", "beam angular degree", "antenna", "antenna element", "panel" and the like may be interchangeable with each other.

In some embodiments, terms such as "frame", "radio frame", "subframe", "slot", "sub-slot", "mini-slot", "symbol", "transmission time interval (TTI)" and the like may be interchangeable with each other.

In some embodiments, "obtaining", "acquiring", "getting", "receiving", "transmitting", "bidirectional transmission", "transmitting and/or receiving" may be interchangeable with each other, and may be interpreted as receiving from other subjects, obtaining from a protocol, obtaining by self-processing, autonomously implementing, and the like.

In some embodiments, terms such as "send", "emit", "report", "issue", "transmit", "bidirectional transmission", "transmit and/or receive" may be interchangeable with each other.

In some embodiments, "predetermined" and "preset" may be interpreted as being specified in advance in a protocol or the like, or may be interpreted as performing a preset operation by a device or the like.

In some embodiments, determining may be interpreted as assessing, deciding, judging, calculating, computing, processing, deriving, investigating, retrieving, looking up, search, inquiry, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., which is not limited to this.

In some embodiments, the judging or determination may be made by a value (0 or 1) represented by 1 bit, a true or false value (Boolean value) represented by true or false, or a numerical comparison (for example, a comparison with a predetermined value), which is not limited to this.

In some embodiments, a "network" may be interpreted as an apparatus (e.g., an access network device, a core network device, etc.) included in the network.

In some embodiments, "not expecting reception" may be interpreted as not receiving on time domain resources and/or frequency domain resources, or may be interpreted as not performing subsequent processing on data or the like after receiving the data or the like; and "not expecting transmission" may be interpreted as not transmitting, or may be interpreted as transmitting but not expecting the receiver to respond to the transmitted content.

In some embodiments, the acquisition of data, information, etc. may comply with laws and regulations of the country where it is located.

In some embodiments, data, information, etc. may be obtained after obtaining the user's consent.

Further, each element, each row, or each column in the table of embodiments of the present disclosure may be implemented as an independent embodiment, and any combination of any element, any row, or any column may also be implemented as an independent embodiment.

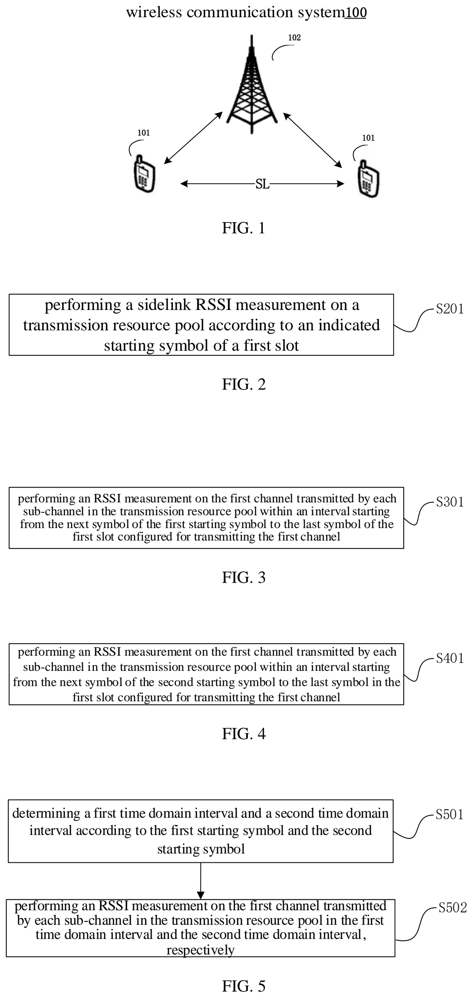

As illustrated in FIG. 1, embodiments of the present disclosure provide a communication method that may be applied to a wireless communication system 100, which may include a user equipment 101 and a network device 102.

The user equipment 101 may be configured to support carrier aggregation and may be connected to a plurality of carrier units of the network device 102, including a primary carrier unit and one or more secondary carrier units.

The user equipment 101 may also be a user equipment 101 (SL UE) configured to support SL and perform SL communication with other user equipment 101. For example, the user equipment 101 is a user equipment 101 based on vehicle to everything (V2X). The vehicle to everything (V2X) is a new generation of information and communication technology that connects vehicles with everything.

It should be understood that the above wireless communication system 100 may be suitable for both low-frequency scenario and high-frequency scenario. Application scenarios for wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access network (CRAN) systems, future fifth-generation (5G) systems, new radio (NR) communication systems, or future evolved public land mobile network (PLMN) systems.

The user equipment 101 illustrated above may be a terminal, an access terminal, a terminal unit, a terminal station, a mobile station (MS), a remote station, a remote terminal, a mobile terminal, a wireless communication device, a terminal agent, or a terminal device. The user equipment 101 may have a wireless transceiver function that enables it to communicate (e.g., wirelessly) with one or more network devices of the one or more communication systems and receive network services provided by the network devices, which herein include, but are not limited to, the network device 102, as illustrated.

The user equipment 101 may be a cellular telephone, a cordless telephone, a session initiation protocol (SIP) telephone, a wireless local loop (WLL) station, a personal digital assistant (PDA) device, a handheld device with a wireless communication capability, a computing device or other processing devices connected to wireless modems, an in-vehicle device, a wearable device, a terminal device in future 5G networks or in future evolved PLMN networks, etc.

The network device 102 may be an access network device (or access network site). The access network device refers to a device that has the function of providing network access, such as radio access network (RAN) base stations and so on. The network device 102 may specifically include a base station (BS), or include a base station and a wireless resource management device for controlling the base station, among other things. The network device 102 may also include a relay station (relay device), an access point, and a base station in future 5G networks, a base station in future evolved PLMN networks, or a NR base station. The network device 102 may be a wearable device or an in-vehicle device. The network device 102 may also be a communication chip having a communication module.

For example, the network device 102 includes, but is not limited to, a next generation base station (gnodeB, gNB) in 5G, an evolved node B (eNB) in an LTE system, a radio network controller (RNC), a node B (NB) in a WCDMA system, a wireless controller in a CRAN system, a base station controller (BSC), a base transceiver station (BTS) in a GSM system or a CDMA system, a home base station (e.g., home evolved nodeB, or home node B, HNB), a baseband unit (BBU), a transmission and receiving point (TRP), transmitting point (TP), or mobile switching center.

The relevant protocol defines a time domain position for the user equipment 101 to perform SL received signal strength indicator (RSSI) measurement, and the time domain position is only applicable to a scenario in which a starting position of a physical sidelink control channel (PSCCH) or a physical sidelink shared channel (PSSCH) is configured in a slot.

In the unlicensed spectrum, the SL UE as a transmitting end may follow a channel access mechanism of listen before talk (LBT). In the LBT mechanism, the transmitting end needs to monitor the channel to perform the idle channel detection. After the idle channel detection, the transmitting end occupies the idle channel to transmit data, but cannot occupy the channel when it is not idle.

Embodiments of the present disclosure provide a communication method, which is performed by a sidelink user equipment (SL UE) 101. Please refer to FIG. 2, FIG. 2 is a flowchart of a communication method illustrated according to an illustrative embodiment; and as illustrated in FIG. 2, the method includes step S201, specifically as follows.

In step S201: the SL UE performs a sidelink received signal strength indicator (RSSI) measurement on a transmission resource pool according to an indicated starting symbol of a first slot.

In some possible implementations, in a scenario of communication through unlicensed spectrum, the SL UE 101 performs a sidelink received signal strength indicator (RSSI) measurement on a transmission resource pool according to an indicated starting symbol of a first slot. In some possible implementations, the first slot is configured for transmitting a first channel. For example, the first slot is configured by a network device 102. Or the first slot is defined by a protocol.

In some possible implementations, transmission of the first channel may be configured in each slot, and the first slot may be applicable to any of such slots.

In some possible implementations, the first channel is at least one of:

a physical sidelink control channel (PSCCH); or
a physical sidelink shared channel (PSSCH).

The PSCCH may be used to transmit control information, and the PSSCH may be used to transmit SL communication data.

In some possible implementations, in the scenario of communication through unlicensed spectrum, the SL UE 101 follows the LBT mechanism before transmitting data.

In some possible implementations, when the SL UE 101 is not transmitting traffic, the physical layer of the SL UE 101 can measure the RSSI of each sub-channel in the transmission resource pool. That is, for the SL UE 101 performing RSSI measurement, the SL UE 101, as a receiving end, does not transmit data itself during the measurement.

In an example, the network device 102 may configure a corresponding transmission resource pool for a group of SL UEs 101, and the transmission resource pool may be configured with a plurality of sub-channels. In this example, the group of SL UEs 101 may share the corresponding transmission resource pool for data transmission. In the process of RSSI measurement performed by the SL UE 101 as the receiving end, the transmission condition of the UE as the transmitting end in each sub-channel can be measured.

In some possible embodiments, in an unlicensed spectrum SL communication, two candidate starting symbols, i.e., the candidate starting positions, configured for transmitting the first channel may be configured within one slot. The two candidate starting symbols affect the starting position for the SL UE 101 to perform the RSSI measurement.

It could be understood that in communication through unlicensed spectrum, the SL UE 101 as the transmitting end follows the LBT mechanism, and only when the LBT is successful will occupy an idle channel to transmit data, and when the LBT is failed will not transmit data. Considering that the first candidate starting symbol in a slot may have LBT failure, two candidate starting symbols are configured in the next slot in this scenario, so that the SL information in the slot can be transmitted as soon as possible after the LBT is successful. For example, if the LBT of the first candidate starting symbol in a slot fails, the transmitting end SL UE 101 does not transmit data, and if the LBT of the second candidate starting symbol in the slot succeeds, the transmitting end SL UE 101 can still transmit data in the slot.

Thus, the transmitting end SL UE 101 may transmit the PSCCH or the PSSCH using the first candidate starting symbol, or may transmit the PSCCH or the PSSCH using the second candidate starting symbol based on the LBT result, and the position for transmit the PSCCH or the PSSCH is unknown to the receiving end SL UE 101. Therefore, it is necessary to determine the RSSI measurement position of the SL UE 101 as the receiving end.

In some possible implementations, the indicated starting symbol may be a starting position for transmitting the PSCCH or PSSCH in a configured slot.

In some possible implementations, the indicated starting symbol includes at least one candidate starting symbols.

In this implementation, the SL UE 101 may determine the starting position of the RSSI measurement according to any one candidate starting symbol or determine the starting position of the RSSI measurement according to two candidate starting symbols.

In some possible implementations, the indicated starting symbol includes at least one of:

a first starting symbol; or
a second starting symbol,
in which the first starting symbol and the second starting symbol are candidate starting symbols within the first slot for transmitting the first channel, and the second starting symbol is later than the first starting symbol.

In some implementations, the second starting symbol is spaced apart from the first starting symbol, e.g., there is at least one symbol between the second starting symbol and the first starting symbol, or the second starting symbol is the next symbol of the first starting symbol.

In some embodiments, the first starting symbol and the second starting symbol may be two candidate starting positions in a slot for transmitting the PSCCH or the PSSCH in the LBT scenario in the related protocol.

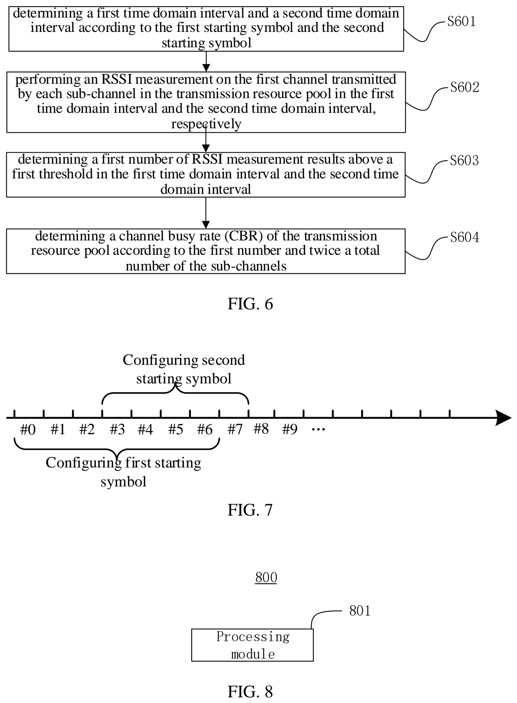

In an example, as illustrated in FIG. 7, at each bandwidth part (BWP), the first starting symbol may be configured from the following symbols {#0, #1, #2, #3, #4, #5, #6}.

In an example, the first starting symbol may default to symbol #0. As can be understood, it is assumed that the index of the symbol in the slot starts from #0.

In an example, as illustrated in FIG. 7, at each BWP, the second starting symbol may be configured from the following symbols {#3, #4, #5, #6, #7}.

In an example, the position of the second starting symbol should satisfy that the number of symbols configured for transmitting the PSCCH or the PSSCH from the second starting symbol to the ending position of the first slot is not less than 6.

In an example, the PSCCH or PSSCH transmission starting from the first starting symbol or the second starting symbol has the same ending symbol within one slot.

In some possible implementations, a starting position for the SL UE 101 to perform the RSSI measurement may be the next symbol of the indicated starting symbol.

In an example, the SL UE 101 performs RSSI measurement on the PSCCH or PSSCH transmitted by each sub-channel of the transmission resource pool starting from the next symbol of the indicated starting symbol of a first slot configured for transmitting the first channel, and obtains an RSSI measurement result. The RSSI measurement result is a linear average value of the total received power measured for all symbols in a measurement period on the sub-channel in which the SL UE 101 is configured.

It could be understood that when the SL UE 101 performs RSSI measurement, the SL UE 101 may receive the transmission intensity of the PSCCH or the PSSCH transmitted by the other transmitting end SL UE 101, that is, obtaining the RSSI measurement result.

In some possible implementations, the SL UE 101 may determine a channel busy ratio (CBR) of the sub-channel corresponding to the transmission resource pool according to the RSSI measurement result of the transmission resource pool.

In some possible implementations, the SL UE 101 may determine transmission parameters such as modulation parameters, transmission rate, transmission power, etc. when subsequently transmitting data according to the CBR. For example, if the CBR represents that the channel busy rate of the sub-channel is high, the SL UE 101 may reduce the transmission rate or transmission power when transmitting data in order to reduce interference. For another example, if the CBR represents that the channel busy rate of the sub-channel is low, the SL UE 101 may adopt a large transmission rate or transmission power when transmitting data to improve data transmission efficiency.

The method of the present disclosure may be applied to an SL communication scenario in unlicensed spectrum, the user equipment 101 may rationally determine the time domain position for performing RSSI measurement according to the indicated starting symbol, improving the reference value of RSSI measurement results of each user equipment 101, and helping to ensure the effectiveness of SL communication.

Embodiments of the present disclosure provide a communication method, which is performed by a sidelink user equipment (SL UE). Please refer to FIG. 3, FIG. 3 is a flowchart of a communication method illustrated according to an illustrative embodiment; and as illustrated in FIG. 3, the method includes step S301, specifically as follows.

In step S301: SL UE performs an RSSI measurement on the first channel transmitted by each sub-channel in the transmission resource pool within an interval starting from the next symbol of the first starting symbol to the last symbol of the first slot configured for transmitting the first channel.

In some possible implementations, in a scenario of communication through unlicensed spectrum, the SL UE 101 performs an RSSI measurement starting from the next symbol of the first starting symbol.

The first slot is configured for transmitting a first channel, for example, the first slot is configured by the network device 102 or defined by a protocol.

In some possible implementations, for an implementation of step S301, reference may be made to the related implementation of step S201 in FIG. 2, which will not be repeated here.

In some possible implementations, the first channel is at least one of: PSCCH, or PSSCH.

In some possible implementations, the plurality of SL UEs 101 corresponding to the transmission resource pool may all know the relevant time domain resources configured for transmitting the PSCCH or the PSSCH. For example, the first starting symbol and the last symbol.

In some possible implementations, as illustrated in FIG. 7, the first starting symbol and the second starting symbol in the first slot are candidate starting positions configured for transmitting the PSCCH or the PSSCH. That is, the PSCCH or PSSCH may be transmitted starting from the first starting symbol, or the PSCCH or PSSCH may be transmitted starting from the second starting symbol.

In some possible implementations, it is assumed that the first starting symbol is #0 and the last symbol configured for transmitting the first channel in the first slot is #n. In the time domain interval #1 to #n, the SL UE 101 performs RSSI measurement to obtain an RSSI measurement result for each sub-channel in the transmission resource pool. Where $n \leq 14$.

From the RSSI measurement results corresponding to each sub-channel, the SL UE 101 determines the number $x1$ of sub-channels with the RSSI measurement result being above a first threshold, and it is assumed that the total number of sub-channels in the transmission resource pool is $y$, thus, the SL UE 101 may determine the CBR at this time: $CBR = x1/y$.

In some possible implementations, the first threshold is defined by a protocol or configured by a network device.

In embodiments of the present disclosure, all SL UEs 101 that perform RSSI measurement start to perform RSSI measurement from the next symbol of the first starting symbol, providing starting positions of RSSI measurement applicable to different SL UEs 101 in an unlicensed spectrum SL communication scenario, and improving uniformity and reference value of RSSI measurement. At the same time, different SL UEs 101 use the same RSSI measurement time domain, which also has high uniformity and reference value when determining the CBR.

Embodiments of the present disclosure provide a communication method, which is performed by a sidelink user equipment (SL UE) 101. Please refer to FIG. 4, FIG. 4 is a flowchart of a communication method illustrated according to an illustrative embodiment; and as illustrated in FIG. 4, the method includes step S401, specifically as follows.

In step S401: SL UE performs an RSSI measurement on the first channel transmitted by each sub-channel in the transmission resource pool within an interval starting from the next symbol of the second starting symbol to the last symbol of the first slot configured for transmitting the first channel.

In some possible implementations, in a scenario of communication through unlicensed spectrum, the SL UE 101 performs an RSSI measurement starting from the next symbol of the second starting symbol.

The first slot is configured for transmitting a first channel, for example, the first slot is configured by the network device 102 or defined by a protocol.

In some possible implementations, for an implementation of step S301, reference may be made to the related implementation of step S201 in FIG. 2, which will not be repeated here.

In some possible implementations, the first channel is at least one of: PSCCH, or PSSCH.

In some possible implementations, as illustrated in FIG. 7, the first starting symbol and the second starting symbol in the first slot are candidate starting positions configured for transmitting the PSCCH or the PSSCH. That is, the PSCCH or PSSCH may be transmitted starting from the first starting symbol, or the PSCCH or PSSCH may be transmitted starting from the second starting symbol.

In some possible implementations, it is assumed that the second starting symbol is #5 and the last symbol of the first slot configured for transmitting the first channel is #n. In the time domain interval #6 to #n, the SL UE 101 performs RSSI measurement to obtain an RSSI measurement result for each sub-channel in the transmission resource pool.

From the RSSI measurement results corresponding to each sub-channel, the SL UE 101 determines the number x2 of sub-channels with the RSSI measurement result being above the first threshold, and it is assumed that the total number of sub-channels in the transmission resource pool is y, thus the SL UE 101 may determine the CBR at this time:

CBR = (number of sub-channels with SL-RSSI being above the first threshold)/(total number of sub-channels) = x2/y.

In embodiments of the present disclosure, all SL UEs 101 that perform RSSI measurement start to perform RSSI measurement from the next symbol of the second starting symbol, providing starting positions of RSSI measurement applicable to different SL UEs 101 in an unlicensed spectrum SL communication scenario, and improving uniformity and reference value of RSSI measurement. At the same time, different SL UEs 101 use the same RSSI measurement time domain, which also has high uniformity and reference value when determining the CBR.

Embodiments of the present disclosure provide a communication method, which is performed by a sidelink user equipment (SL UE) 101. Please refer to FIG. 5, FIG. 5 is a flowchart of a communication method illustrated according to an illustrative embodiment; and as illustrated in FIG. 5, the method includes steps S501~S502, specifically as follows.

In step S501: the SL UE determines a first time domain interval and a second time domain interval according to the first starting symbol and the second starting symbol.

In some possible implementations, in a scenario of communication through unlicensed spectrum, the SL UE 101 performs an RSSI measurement according to the first starting symbol and the second starting symbol.

In some possible embodiments, the first time domain interval and the second time domain interval may be divided in a variety of ways, for example, the two time domain intervals start with a first starting symbol and a second starting symbol, respectively, or the two time domain intervals include a first starting symbol and a second starting symbol, respectively, or the two time domain intervals are later than the first starting symbol and the second starting symbol, respectively.

In an example, the relationship between the first starting symbol and the second starting symbol may refer to FIG. 7.

In some possible implementations, a starting position of the first time domain interval is the next symbol of the first starting symbol.

In an example, it is assumed that the first starting symbol is #0 and its next symbol is #1.

In some possible implementations, an ending position of the first time domain interval is the second starting symbol, or a previous symbol of the second starting symbol.

In an example, when the starting position of the first time domain interval is the next symbol of the first starting symbol, the ending position of the first time domain interval may be the second starting symbol or the previous symbol of the second starting symbol.

For example, still taking the first starting symbol as #0 as an example, and assuming that the second starting symbol is #6, the previous symbol of the second starting symbol is #5. The first time domain interval may be from symbols #1 to #6, or the first time domain interval may be from #1 to #5.

In some possible implementations, a starting position of the second time domain interval is the next symbol of the second starting symbol, or the second starting symbol.

In an example, it is assumed that the second starting symbol is #6 and its next symbol is #7.

In some possible implementations, an ending position of the second time domain interval is the last symbol of the first slot configured for transmitting the first channel.

In an example, the last symbol configured for transmitting the first channel is #n.

For example, still taking the second starting symbol as #6 as an example, the second time domain interval may be from #6 to #n, or the second time domain interval may be from #7 to #n.

Therefore, in connection with the above example, the first time domain interval may be from symbols #1 to #6, and the second time domain interval may be from #7 to #n. Or the first time domain interval may be from symbols #1 to #5, and the second time domain interval may be from #6 to #n. Or the first time domain interval may be from symbols #1 to #5, and the second time domain interval may be from #7 to #n.

In step S502: the SL UE 101 performs an RSSI measurement on the first channel transmitted by each sub-channel in the transmission resource pool in the first time domain interval and the second time domain interval, respectively.

In some possible implementations, when the SL UE 101 performs RSSI measurement in the first time domain interval, the SL UE 101 may obtain an RSSI measurement result corresponding to each sub-channel. For example, in the first time domain interval from #1 to #6, the SL UE 101 performs RSSI measurement to obtain an RSSI measurement result for each sub-channel in the transmission resource pool. In the second time domain interval from #7 to #n, the SL UE 101 performs RSSI measurement to obtain an RSSI measurement result for each sub-channel in the transmission resource pool.

In embodiments of the present disclosure, the SL UE 101 performs RSSI measurement in the time domain interval determined according to the two candidate starting symbols, which has more opportunities for RSSI measurement than the manner in the related protocol, and is beneficial to improve the accuracy of the RSSI measurement result, improving the problem of inaccurate results caused by the RSSI measurement manner in the related protocol.

Embodiments of the present disclosure provide a communication method, which is performed by a sidelink user equipment (SL UE) 101. Please refer to FIG. 6, FIG. 6 is a flowchart of a communication method illustrated according to an illustrative embodiment; and as illustrated in FIG. 6, the method includes steps S601~S604, specifically as follows.

In step S601: in a scenario of communication through unlicensed spectrum, the SL UE determines a first time domain interval and a second time domain interval according to the first starting symbol and the second starting symbol.

For an implementation of step S601, reference may be made to the related implementation of step S501 in FIG. 5, which will not be repeated here.

In step S602: the SL UE 101 performs an RSSI measurement on the first channel transmitted by each sub-channel in the transmission resource pool in the first time domain interval and the second time domain interval, respectively.

For an implementation of step S602, reference may be made to the related implementation of step S502 in FIG. 5, which will not be repeated here.

In step S603: the SL UE 101 determines a first number of sub-channels with the RSSI measurement result being above a first threshold in the first time domain interval and the second time domain interval.

In some possible implementations, the first threshold is defined by a protocol or configured by a network device.

The first threshold may be a relevant RSSI threshold for CBR.

In some possible implementations, the SL UE 101 determines, based on the RSSI measurements in the first time domain interval and the second time domain interval, a first number of RSSI measurements above the first threshold within the two time domain intervals, e.g., the first number is denoted as x3.

In step S604: the SL UE 101 determines the channel busy rate (CBR) of the transmission resource pool based on the first number and twice the total number of sub-channels.

In some possible implementations, assuming that the total number of sub-channels is y, the SL UE 101 may determine the CBR at this time:

CBR = (first number of RSSI measurements with SL-RSSI being above the first threshold)/(total number of sub-channels * 2) = x3/2y.

It could be understood that in the manner of performing RSSI measurement in the first time domain interval and the second time domain respectively, each sub-channel corresponds to two RSSI measurement results, and the two RSSI measurement results are separately judged to determine whether they are above the first threshold.

In embodiments of the present disclosure, the SL UE 101 determines the RSSI measurement results of the two time domain intervals respectively, and determines the CBR in combination with the RSSI measurement results of the two time domain intervals, in which the SL UE 101 has more measurement opportunities in the two time domain intervals, and it is more conducive to improving accuracy when determining the CBR, avoiding the problem of the CBR computation error and thus inappropriate congestion control caused by an inaccurate RSSI measurement manner in the related art.

Embodiments of the present disclosure provide a communication method, and the method includes steps S701~S703, specifically as follows.

In step S701: the network device 102 transmits first information to the SL UE 101.

The first information indicates a first threshold.

In some embodiments, three measurement manners may correspond to one first threshold; or the three measurement manners have different first thresholds, that is, they correspond to their respective first thresholds.

The three measurement manners are: a related implementation of performing RSSI measurement according to the first starting symbol corresponding to step S301 in FIG. 3, a related implementation of performing RSSI measurement according to the second starting symbol corresponding to step S401 in FIG. 4, and a related implementation of performing RSSI measurement according to the first starting symbol and the second starting symbol corresponding to steps S501 to S502 in FIG. 5 or steps S601 to S604 in FIG. 6, respectively.

The relationship between the first starting symbol and the second starting symbol may refer to the description of the foregoing embodiment and FIG. 7.

In an example, the first thresholds of the above three measurement manners may adopt the CBR-related RSSI threshold defined in the relevant protocol.

In another example, the first thresholds corresponding to three measurement manners are respectively configured in the first information.

For example, the first information includes a first information field configured for indicating a measurement manner and a second information field configured for indicating a value of a first threshold. The number of bits in the first information field and the second information field may be configured according to the demand.

Taking the first information field including two bits as an example, when the value of the two bits is 01, it corresponds to the first measurement manner, that is, a related implementation of performing RSSI measurement according to the first starting symbol corresponding to step S301 in FIG. 3. When the value of the two bits is 10, it corresponds to the second measurement manner, that is, the related implementation of performing RSSI measurement based on the second start symbol corresponding to step S401 in FIG. 4. When the value of the two bits is 11, it corresponds to the third measurement manner, that is, the related implementation of performing RSSI measurement according to the first starting symbol and the second starting symbol corresponding to steps S501 to S502 in FIG. 5 or steps S601 to S604 in FIG. 6, respectively.

Taking the second information field including two bits as an example, when the value of the two bits is 01, it corresponds to the first threshold K1; when the value of the two bits is 00, it corresponds to the first threshold K2; and when the value of the two bits is 10, it corresponds to the first threshold K3.

In step S702: in a scenario of communication through unlicensed spectrum, the SL UE 101 performs a sidelink received signal strength indicator (RSSI) measurement on a transmission resource pool according to an indicated starting symbol of a first slot.

In some possible implementations, for an implementation of step S702, reference may be made to the related implementation of step S301 in FIG. 3, which will not be repeated here.

In some possible implementations, for an implementation of step S702, reference may be made to the related implementation of step S401 in FIG. 4, which will not be repeated here.

In some possible implementations, for an implementation of step S702, reference may be made to the related implementation of steps S501~S502 in FIG. 5 or steps S601~S602 in FIG. 6, which will not be repeated here.

In step S703: the SL UE 101 determines the CBR according to the RSSI measurement result and the first threshold indicated by the first information.

In some embodiments, in the related implementation of step S301, the manner of determining the CBR in the first measurement manner is described, and thus reference may be made to its description.

In some embodiments, in the related implementation of step S401, the manner of determining the CBR in the second measurement manner is described, and thus reference may be made to its description.

In some embodiments, in the related implementations of steps S603 to S604, the manner of determining the CBR in the third measurement manner is described, and thus reference may be made to its description.

In embodiments of the present disclosure, according to the first threshold configured by the network device 102, the SL UE 101 may determine the corresponding RSSI measurement result based on different measurement manners, providing a reliable RSSI measurement manner for SL communication in the unlicensed spectrum, and improving the reliability of the RSSI measurement result.

In order to facilitate understanding of the embodiments of the present disclosure, some specific examples are set forth below.

Embodiments of the present disclosure provide a method for the SL UE 101 to perform RSSI measurement in a scenario of SL communication through unlicensed spectrum.

Embodiment 1:

The RSSI measurement is performed based on all OFDM symbols in which the PSCCH/PSSCH is located from the first starting symbol of the slot configuration, for example, the measurement is started from the next symbol of the first starting symbol.

Embodiment 2:

The RSSI measurement is performed based on all OFDM symbols in which the PSCCH/PSSCH is located from the second starting symbol of the slot configuration, for example, the measurement is started from the next symbol of the second starting symbol.

As can be understood, when a scenario of communication through unlicensed spectrum is involved, there are two candidate starting symbols in a slot configured for transmitting a PSCCH or a PSSCH.

Embodiment 3:

The slot is divided into two parts according to the second starting symbol:

a first part: the next symbol of the first starting symbol ~ the second starting symbol; and

a second part: the next symbol of the second starting symbol ~ the ending symbol of the PSCCH or PSSCH transmission.

In some implementations, the first part corresponds to the first time domain interval in the foregoing embodiments.

In some embodiments, the second part corresponds to the second time domain interval in the foregoing embodiments.

In the present embodiment, the two parts calculate the RSSI values respectively, and at this time, there may be more measurement opportunities than the existing manners, which is beneficial to improving the accuracy of RSSI measurement.

In the present embodiment, CBR = (number of RSSI measurements with SL-RSSI being above the CBR threshold)/(total number of sub-channels * 2).

In some implementations, the CBR threshold corresponds to the first threshold in the foregoing embodiments.

In embodiments of the present disclosure, a method for performing RSSI measurement in a scenario of communication through unlicensed spectrum is provided, which is beneficial to improving reference value and accuracy in the measurement process, ensuring accurate CBR calculation and avoiding inappropriate congestion control.

Based on the same concept as the above method embodiments, embodiments of the present disclosure also provide a communication processing apparatus, which may have the functions of the user equipment 101 in the above method embodiments and may be used to perform the steps provided by the method embodiments described above and performed by the user equipment 101. The functions can be implemented by hardware, by software or by executing the corresponding software through hardware. The hardware or software includes one or more modules corresponding to the functions.

In a possible implementation, the apparatus 800 as illustrated in in FIG. 8 may act as the user equipment 101 involved in the method embodiments described above and perform the steps performed by the user equipment 101 in the method embodiments described above. As illustrated in FIG. 8, the apparatus 800 may include a processing module 801, and the processing module 801 may be configured for a communication processing apparatus to perform a processing operation such as generating information/messages to be transmitted, or processing received signals to obtain information/messages.

When performing the steps implemented by the user equipment 101, the processing module 801 is configured to perform, in a scenario of communication through unlicensed spectrum, a sidelink received signal strength indicator (RSSI) measurement on a transmission resource pool according to an indicated starting symbol of a first slot,

in which the first slot is configured for transmitting a first channel.

In some possible implementations, the indicated starting symbol includes at least one candidate starting symbols.

In some possible implementations, the indicated starting symbol includes at least one of:

a first starting symbol; or

a second starting symbol,

in which the first starting symbol and the second starting symbol are candidate starting symbols within the first slot for transmitting the first channel, and the second starting symbol is later than the first starting symbol.

In some possible implementations, the processing module 801 is further is configured to perform an RSSI measurement on the first channel transmitted by each sub-channel in the transmission resource pool within an interval starting from the next symbol of the first starting symbol to the last symbol of the first slot configured for transmitting the first channel.

In some possible implementations, the processing module 801 is further configured to perform an RSSI measurement on the first channel transmitted by each sub-channel in the transmission resource pool within an interval starting from the next symbol of the second starting symbol to the last symbol of the first slot configured for transmitting the first channel.

In some possible implementations, the processing module 801 is further determine a first time domain interval and a second time domain interval according to the first starting symbol and the second starting symbol; and

perform an RSSI measurement on the first channel transmitted by each sub-channel in the transmission resource pool in the first time domain interval and the second time domain interval, respectively.

In some possible implementations, a starting position of the first time domain interval is the next symbol of the first starting symbol.

In some possible implementations, an ending position of the first time domain interval is the second starting symbol, or a previous symbol of the second starting symbol.

In some possible implementations, a starting position of the second time domain interval is the next symbol of the second starting symbol, or the second starting symbol.

In some possible implementations, an ending position of the second time domain interval is the last symbol of the first slot configured for transmitting the first channel.

In some possible implementations, the processing module 801 is further configured to determine a first number of RSSI measurement results above a first threshold in the first time domain interval and the second time domain interval; and determine a channel busy rate (CBR) of the transmission resource pool according to the first number and twice a total number of the sub-channels.

In some possible implementations, the first threshold is defined by a protocol or configured by a network device.

In some possible implementations, the first channel is at least one of:

a physical sidelink control channel (PSCCH); or
a physical sidelink shared channel (PSSCH).

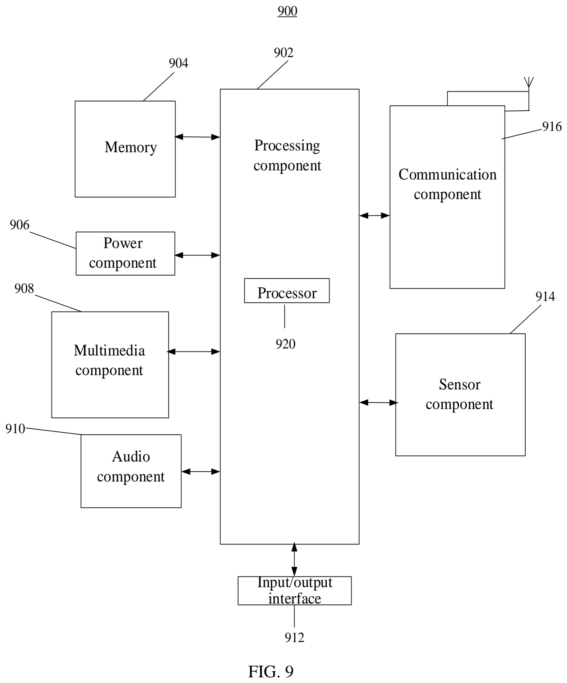

When the communication apparatus is a user equipment 101, its structure may also be as illustrated in FIG. 9. The apparatus 900 may be a mobile phone, a computer, a digital broadcast terminal, a messaging device, a game console, a tablet device, a medical device, a fitness device, a personal digital assistant, etc.

As illustrated in FIG. 9, the apparatus 900 may include one or more of the following components: a processing component 902, a memory 904, a power component 906, a multimedia component 908, an audio component 910, an input/output (I/O) interface 912, a sensor component 914, and a communication component 916.

The processing component 902 generally controls overall operation of the apparatus 900, such as operations related to display, call, data communication, camera and record. The processing component 902 may include one or a plurality of processors 920 to execute instructions, so as to achieve all or a part of steps of the above-described method. Additionally, the processing component 902 may include one or more modules, facilitating interaction between the processing component 902 and other components. For example, the processing component 902 may include a multimedia module, facilitating interaction between the multimedia component 908 and the processing component 902.

The memory 904 is configured to store various types of data to support the operations of the apparatus 900. Examples of these data include instructions, contact data, telephone book data, messages, pictures, videos, etc. for any application or method operated on the apparatus 900. The memory 904 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power component 906 provides power for various components of the apparatus 900. The power component 906 may include a power management system, one or a plurality of power sources, and other components associated with generating, managing and distributing power for the apparatus 900.

The multimedia component 908 includes a screen that provides an output interface between the apparatus 900 and the user. In some embodiments, the screen may include a liquid crystal display (LCD), and a touch panel (TP). If the screen includes the touch panel, the screen may be realized as a touch screen, so as to receive an input signal from the user. The touch panel includes one or a plurality of touch sensors to sense touch, swipe and gesture on the touch panel. The touch sensor not only can sense the boundary of the touch or swipe action, but also can detect duration time and pressure related to the touch or swipe operation. In in some embodiments, the multimedia component 908 includes a front camera and/or a rear camera. When the apparatus 900 is in an operation mode, such as in a photographing or video mode, the front camera and/or the rear camera can receive external multimedia data. Each of the front camera and the rear camera may be a fixed optical lens system or has a focal length and optical zoom capability.

The audio component 910 is configured to output and/or input an audio signal. For example, the audio component 910 includes a microphone (MIC). The microphone is configured to receive external audio signal when the apparatus 900 is in the operation mode, such as in a call mode, a record mode and a speech recognition mode. The received audio signal can be further stored in the memory 904 or transmitted via the communication component 916. In some embodiments, the audio component 910 further includes a speaker configured to output the audio signal.

The input/output (I/O) interface 912 provides interfaces between the processing component 902 and peripheral interface modules, and the forgoing peripheral interface module may be a keyboard, a click wheel, a button, etc. The button may include but not limited to a homepage button, a volume button, a start button and a lock button.

The sensor component 914 includes one or a plurality of sensors configured to provide state assessments of various aspects of apparatus 900. For example, the sensor component 914 may detect on/off state of the apparatus 900, relative positioning of components. For example, the components may be a display and a keypad of the apparatus 900. The sensor component 914 may further detect positional variation of the apparatus 900 or one component of the apparatus 900, presence or absence of contact between the user and the apparatus 900, orientation or acceleration/deceleration of the apparatus 900 and temperature variation of the apparatus 900. The sensor component 914 may include a proximity sensor configured to detect presence of nearby objects without any physical contact. The sensor component 914 may also include an optical sensor, such as a COMS or CCD image sensor configured to use in an imaging application. In some embodiments, the sensor component 914 may further include an acceleration sensor, a gyro sensor, a magnetic sensor, a pressure sensor or a temperature sensor.

The communication component 916 is configured to facilitate wired or wireless communication between the apparatus 900 and other devices. The apparatus 900 may access to wireless network based on communication standard, such as Wi-Fi, 2G, or 3G, or combination thereof. In an illustrative embodiment, the communication component 916 receives a broadcast signal or information related to the broadcast from an external broadcast management system. In an illustrative embodiment, the communication component 916 further includes a near field communication (NFC) module to facilitate short-range communication. For example, the NFC module may be realized based on a radio frequency identification (RFID) technology, an infra-red data association (IrDA) technology, an ultra-wide band (UWB) technology, a Bluetooth (BT) technology and other technologies.

In an illustrative embodiment, the apparatus 900 may be realized by one or a plurality of application specific integrated circuits (ASIC), digital signal processors (DSP), digital signal processing equipments (DSPD), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 904 including instructions, and the instructions is executable by the processor 920 of the apparatus 900 to achieve the method described above. For example, the non-transitory computer readable storage medium may be ROM, random access memory (RAM), CD-ROM, magnetic tape, floppy disks, and optical data storage devices, among others.

Industrial practicality

In the method of the present disclosure, an RSSI measurement manner for an SL communication scenario in an unlicensed spectrum is provided, such that the user equipment can rationally determine time-domain position for performing RSSI measurement according to a set start symbol, improving the reference value of RSSI measurement result of the user equipment, and helping to ensure the effectiveness of SL communication.

**Claims**

1. A communication method, performed by a sidelink user equipment (SL UE), comprising:

   in a scenario of communication through unlicensed spectrum, performing a sidelink received signal strength indicator (RSSI) measurement on a transmission resource pool according to an indicated starting symbol of a first slot,
   wherein the first slot is configured for transmitting a first channel.

2. The method according to claim 1, wherein the indicated starting symbol comprises at least one of:

   a first starting symbol; or
   a second starting symbol,
   wherein the first starting symbol and the second starting symbol are candidate starting symbols within the first slot for transmitting the first channel, and the second starting symbol is later than the first starting symbol.

3. The method according to claim 2, wherein performing the sidelink received signal strength indicator (RSSI) measurement on the transmission resource pool according to the indicated starting symbol of the first slot comprises:
   performing an RSSI measurement on the first channel transmitted by each sub-channel in the transmission resource pool within an interval starting from the next symbol of the first starting symbol to the last symbol of the first slot configured for transmitting the first channel.

4. The method according to claim 2, wherein performing the sidelink received signal strength indicator (RSSI) measurement on the transmission resource pool according to the indicated starting symbol of the first slot comprises:
   performing an RSSI measurement on the first channel transmitted by each sub-channel in the transmission resource pool within an interval starting from the next symbol of the second starting symbol to the last symbol of the first slot configured for transmitting the first channel.

**5.** The method according to claim 2, wherein performing the sidelink received signal strength indicator (RSSI) measurement on the transmission resource pool according to the indicated starting symbol of the first slot comprises:

determining a first time domain interval and a second time domain interval according to the first starting symbol and the second starting symbol; and
performing an RSSI measurement on the first channel transmitted by each sub-channel in the transmission resource pool in the first time domain interval and the second time domain interval, respectively.

**6.** The method according to claim 5, wherein:
a starting position of the first time domain interval is the next symbol of the first starting symbol.

**7.** The method according to claim 6, wherein:
an ending position of the first time domain interval is the second starting symbol, or a previous symbol of the second starting symbol.

**8.** The method according to claim 5, wherein:
a starting position of the second time domain interval is the next symbol of the second starting symbol, or the second starting symbol.

**9.** The method according to claim 8, wherein an ending position of the second time domain interval is the last symbol of the first slot configured for transmitting the first channel.

**10.** The method according to any one of claims 6 to 9, further comprising:

determining a first number of RSSI measurement results above a first threshold in the first time domain interval and the second time domain interval; and
determining a channel busy rate (CBR) of the transmission resource pool according to the first number and twice a total number of the sub-channels.

**11.** The method according to claim 10, wherein:
the first threshold is defined by a protocol or configured by a network device.

**12.** The method according to any one of claims 1 to 11, wherein the first channel is at least one of:

a physical sidelink control channel (PSCCH); or
a physical sidelink shared channel (PSSCH).

**13.** A communication apparatus, configured in a sidelink user equipment (SL UE), comprising:

a processing module, configured to perform, in a scenario of communication through unlicensed spectrum, a sidelink received signal strength indicator (RSSI) measurement on a transmission resource pool according to an indicated starting symbol of a first slot,
wherein the first slot is configured for transmitting a first channel.

**14.** A user equipment, comprising a processor and a memory, wherein:

the memory is configured to store a computer program; and
the processor is configured to execute the computer program to implement the method according to any one of claims 1 to 12.

**15.** A computer-readable storage medium storing instructions, wherein a computer invokes and executes the instructions to cause the computer to perform the method according to any one of claims 1 to 12.

wireless communication system100

FIG. 1

| performing a sidelink RSSI measurement on a transmission resource pool according to an indicated starting symbol of a first slot | S201 |

FIG. 2

| performing an RSSI measurement on the first channel transmitted by each sub-channel in the transmission resource pool within an interval starting from the next symbol of the first starting symbol to the last symbol of the first slot configured for transmitting the first channel | S301 |

FIG. 3

| performing an RSSI measurement on the first channel transmitted by each sub-channel in the transmission resource pool within an interval starting from the next symbol of the second starting symbol to the last symbol in the first slot configured for transmitting the first channel | S401 |

FIG. 4

| determining a first time domain interval and a second time domain interval according to the first starting symbol and the second starting symbol | S501 |

| performing an RSSI measurement on the first channel transmitted by each sub-channel in the transmission resource pool in the first time domain interval and the second time domain interval, respectively | S502 |

FIG. 5

determining a first time domain interval and a second time domain interval according to the first starting symbol and the second starting symbol ⌐S601

performing an RSSI measurement on the first channel transmitted by each sub-channel in the transmission resource pool in the first time domain interval and the second time domain interval, respectively ⌐S602

determining a first number of RSSI measurement results above a first threshold in the first time domain interval and the second time domain interval ⌐S603

determining a channel busy rate (CBR) of the transmission resource pool according to the first number and twice a total number of the sub-channels ⌐S604

FIG. 6

Configuring second starting symbol

#0  #1  #2  #3  #4  #5  #6  #7  #8  #9  ...

Configuring first starting symbol

FIG. 7

800

801

Processing module

FIG. 8

<u>900</u>

904        902

| Memory |
| :---: |

| Processing component |
| :---: |

| Communication component |
| :---: |

916

906

| Power component |
| :---: |

908

| Multimedia component |
| :---: |

| Processor |
| :---: |

920

914

| Sensor component |
| :---: |

910

| Audio component |
| :---: |

| Input/output interface |
| :---: |

912

FIG. 9

## INTERNATIONAL SEARCH REPORT

| International application No. |
| --- |
| **PCT/CN2023/087170** |

| A. | CLASSIFICATION OF SUBJECT MATTER |
| --- | --- |

H04W 4/70(2018.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CJFD, VEN, EXTXTC, WPABS, CNTXT, 3GPP: 边路, 侧链, 侧行, 副链, 旁链, 旁路, 起始, 符号, 测量, 强度, 第二, 第一, 时间, 时刻, 时隙, LBT, RSSI, sidelink, SL, start+, symbol, measure, measurement, strength, first, second, time, slot

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| Y | WO 2022198666 A1 (HUAWEI TECHNOLOGIES CO., LTD.) 29 September 2022 (2022-09-29) description, paragraphs 42-127 | | 1-15 |
| Y | KR 20200114929 A (SAMSUNG ELECTRONICS CO., LTD.) 07 October 2020 (2020-10-07) description, paragraphs 89-285 | | 1-15 |
| A | CN 111148226 A (BEIJING SPREADTRUM HI-TECH COMMUNICATIONS TECHNOLOGY CO., LTD.) 12 May 2020 (2020-05-12) entire document | | 1-15 |
| A | CN 115066031 A (HEFEI YIRUI COMMUNICATION TECHNOLOGY CO., LTD. et al.) 16 September 2022 (2022-09-16) entire document | | 1-15 |
| A | WO 2022150247 A1 (QUALCOMM INCORPORATED) 14 July 2022 (2022-07-14) entire document | | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 November 2023** | **22 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/087170**

| Patent document cited in search report | | | Publication date (day/month/year) | Patent family member(s) | | | Publication date (day/month/year) |
|---|---|---|---|---|---|---|---|
| WO | 2022198666 | A1 | 29 September 2022 | None | | | |
| KR | 20200114929 | A | 07 October 2020 | US | 2020314804 | A1 | 01 October 2020 |
| CN | 111148226 | A | 12 May 2020 | US | 2021410112 | A1 | 30 December 2021 |
| | | | | EP | 3876635 | A1 | 08 September 2021 |
| | | | | WO | 2020088227 | A1 | 07 May 2020 |
| CN | 115066031 | A | 16 September 2022 | None | | | |
| WO | 2022150247 | A1 | 14 July 2022 | None | | | |

Form PCT/ISA/210 (patent family annex) (July 2022)